(19) Europäisches Patentamt
European Patent Office
Office européen des brevets

(11) Veröffentlichungsnummer : **0 126 324**
**B1**

(12) # EUROPÄISCHE PATENTSCHRIFT

(45) Veröffentlichungstag der Patentschrift : **27.05.87**

(51) Int. Cl.[4] : **C 09 B 29/00**, C 09 B 29/36, G 03 C 1/84

(21) Anmeldenummer : **84104635.2**

(22) Anmeldetag : **25.04.84**

(54) **Photographisches Aufzeichnungsmaterial.**

(30) Priorität : **07.05.83 DE 3316887**

(43) Veröffentlichungstag der Anmeldung : **28.11.84 Patentblatt 84/48**

(45) Bekanntmachung des Hinweises auf die Patenterteilung : **27.05.87 Patentblatt 87/22**

(84) Benannte Vertragsstaaten : **CH DE FR GB LI**

(56) Entgegenhaltungen :
**CH-A- 568 374**
**DE-A- 1 924 570**
**DE-A- 2 004 487**
**DE-A- 2 050 901**
**FR-A- 2 132 123**
**FR-A- 2 148 445**
**FR-A- 2 202 088**
**GB-A- 2 014 177**
**US-A- 4 001 205**
**US-A- 4 067 864**

(73) Patentinhaber : **Agfa-Gevaert AG**
**Patentabteilung**
**D-5090 Leverkusen 1 (DE)**

(72) Erfinder : **Bergthaller, Peter, Dr.**
**Leuchter Gemark 5a**
**D-5060 Bergisch-Gladbach 2 (DE)**
Erfinder : **Rosenhahn, Lothar, Dr.**
**Morgengraben 16**
**D-5000 Köln 80 (DE)**
Erfinder : **Herd, Karl Josef, Dr.**
**Buchholzstrasse 32**
**D-5000 Köln 80 (DE)**
Erfinder : **Fuerstenwerth, Hauke, Dr.**
**Morgengraben 3**
**D-5000 Köln 80 (DE)**
Erfinder : **Stolzenburg, Rudolf, Dipl.-Ing.**
**Bogenstrasse 27**
**D-4018 Langenfeld (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 126 324 B1**

Jouve, 18, rue St-Denis, 75001 Paris, France

**Beschreibung**

Die Erfindung betrifft ein photographisches Aufzeichnungsmaterial mit wenigstens einer lichtempfindlichen Silberhalogenidemulsionsschicht und gegebenenfalls weiteren Schichten, wobei wenigstens eine Schicht bestimmte Azofarbstoffe enthält.

Photographische Aufzeichnungsmaterialien mit lichtempfindlichen Silberhalogenidemulsionsschichten enthalten im allgemeinen Filter- und Lichthofschutzschichten zur Absorption unerwünschten Lichtes. Um in farbphotographischen Aufzeichnungsmaterialien die Einwirkung des blauen Lichtes auf die rot- und grünempfindlichen Schichten zu unterdrücken, können diese Materialien oberhalb der zu schützenden Schichten eine Gelbfilterschicht enthalten. In dieser befindet sich im allgemeinen entweder kolloidales gelbes Silber oder ein gelber Farbstoff, z. B. der aus der US-PS 3 672 898 bekannte Azofarbstoff Tartrazin. Die Farbstoffe können dabei mit Beizen festgelegt sein. Andere Azofarbstoffe sind z. B. bekannt aus den Deutschen Offenlegungsschriften 1 930 491, 2 123 061. 2 162 612, 2 349 709 und 2 902 486 und aus der US-PS 4 359 418, die sich aber nicht auf photographische Verwendungen beziehen.

Bei Verwendung von kolloidalem Silber in Gelbfilterschichten kann es durch eine verstärkte physikalische Entwicklung zu einer erheblichen Verschlechterung der Körnigkeit des Materials und zu einer Erhöhung des Schleiers kommen. Derartige Nachteile werden zwar bei der Verwendung von Farbstoffen vermieden, aber Filterschichten auf Basis von Farbstoffen müssen im allgemeinen in größerer Schichtdicke vergossen werden als entsprechende Schichten aus kolloidalem Silber, um die gleiche Filterdichte zu erreichen. Dieses führt zu einer verstärkten Streuung des Lichtes und deshalb zu einem Verlust an Bildschärfe.

Es wurde nun gefunden, daß sich Azofarbstoffe der Formel I

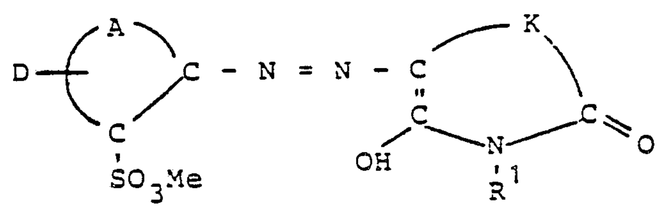

(I)

worin

A Rest zur Vervollständigung einer Diazokomponente aus der Benzolreihe,

K Rest zur Vervollständigung einer Kupplungskomponente aus der Klasse der Hydroxypyridone,

D Gruppe mit Elektronendonoreigenschaften, die in p-Stellung zur Azogruppe steht,

$R^1$ H oder gegebenenfalls substituiertes Alkyl, Cycloalkyl, Aryl oder Aralkyl,

Me Wasserstoff oder ein Kation, insbesondere Alkali, z. B. Li oder Na, bedeuten,

mit der Maßgabe, daß wenigstens eine weitere löslichmachende Gruppe, insbesondere eine Sulfonsäure- oder Carboxylgruppe, enthalten ist, in hervorragender Weise als Filterfarbstoffe in photographischen Aufzeichnungsmaterialien eignen.

In einer bevorzugten Ausführungsform enthält $R^1$ und/oder K eine löslichmachende Gruppe, z. B. einen Sulfonsäure- oder Carboxylrest.

Die Verbindungen enthalten in einer bevorzugten Ausführungsform keine Gruppen, die zu einer irreversiblen Anfärbung von Gelatine führen.

Die mit K vervollständigte Kupplungskomponente ist in einer bevorzugten Ausführungsform ein Hydroxypyridon der folgenden Formel II

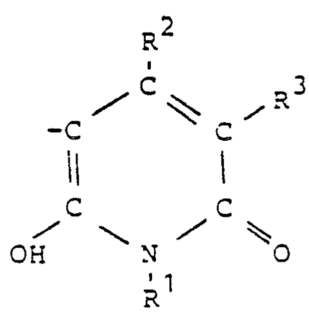

(II)

worin

$R^1$ die oben angegebene Bedeutung hat und worin bedeuten

$R^2$ Alkyl, insbesondere mit 1 bis 4 C-Atomen, z. B. Methyl oder eine gegebenenfalls veresterte Carboxylgruppe oder substituiertes Alkyl, z. B. $-CH_2-SO_3Me$.

$R^3$ Wasserstoff oder eine funktionelle Gruppe.

$R^1$ ist hierbei vorzugsweise Alkyl mit 1 bis 4 C-Atomen, z. B. Methyl und kann mit einer löslichmachenden Gruppe, z. B. einer Sulfonsäuregruppe substituiert sein.

$R^1$ ist weiterhin vorzugsweise gegebenenfalls substituiertes Cyclohexyl, Phenyl oder Benzyl.

Bevorzugte funktionelle Gruppen, für die $R^3$ stehen kann, sind $—SO_3Me$, $—CH_2CO_2Me$, $—CH_2SO_3Me$, $—SO_2CH_3$, $—CONH_2$, —CN, Acyl, insbesondere $—COCH_3$ bzw. verestertes Carboxyl.

Die mit A vervollständigte Diazokomponente ist in einer bevorzugten Form ein Phenylrest der Formel III

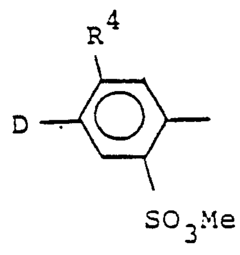

(III)

worin

D und Me die oben angegebene Bedeutung haben und worin $R^4$ Wasserstoff oder Alkyl, insbesondere mit 1 bis 4 C-Atomen, beispielsweise Methyl oder eine Alkoxygruppe, vorzugsweise mit 1 bis 4 C-Atomen sowie Halogen, z. B. Cl bedeutet.

Der Rest D in den Formeln I und III zeichnet sich durch seine Elektronendonoreigenschaften aus. In einer bevorzugten Ausführungsform handelt es sich hierbei um Substituenten, deren Substituentenkonstante δ für die p-Stellung gemäß der bekannten Hammett-Gleichung (lg k/ko = ρσ zwischen etwa + 0,23 und — 0,30 liegt. Die hier angegebene Substituentenkonstante δ für die p-Stellung wird in der Literatur als $δ_p$ bezeichnet, so z. B. « Organikum », 1967, VEB Deutscher Verlag der Wissenschaften Berlin, Seite 133-138. In einer bevorzugten Ausführungsform bedeutet D Alkyl, insbesondere Methyl, eine Alkoxygruppe, eine Phenoxygruppe, eine Acylamino- oder Alkoxycarbonylaminogruppe oder einen über die 2-Position verknüpften Benzothiazolylrest oder Halogen, insbesondere Cl.

Ganz besonders wertvolle Verbindungen der Formel I entsprechen der folgenden allgemeinen Formel IV

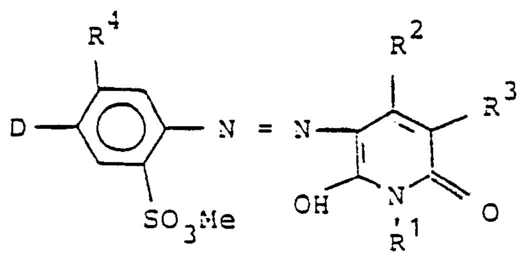

(IV)

wobei die Substituenten die oben angegebene Bedeutung haben, und eignen sich ganz besonders für farbphotographische Aufzeichnungsmaterialien mit mehreren Silberhalogenidemulsionsschichten und gegebenenfalls weiteren Schichten für die Verwendung in einer Gelbfilterschicht. Eine derartige Gelbfilterschicht ist vorzugsweise zwischen einer blauempfindlichen Schicht und den rot- und grünempfindlichen Schichten angeordnet, sie kann aber auch an anderer Stelle angeordnet sein, z. B. oberhalb der bauempfindlichen Schicht(en). Weiterhin können die Farbstoffe auch in Abmischung mit anderen Farbstoffen verwendet werden, z. B. für Lichthofschutzschichten.

Die erfindungsgemäßen Azofarbstoffe lassen sich in an sich bekannter Weise durch Azokupplung herstellen. Als Diazokomponenten eignen sich z. B. diazotierte Orthanilsäuren und als Kupplungskomponente beispielsweise 1,4-Dialkyl-6-hydroxypyridone. Geeignete Diazokomponenten sind beispielsweise :

2-Amino-5-alkoxybenzolsulfonsäuren,
2-Amino-5-phenoxybenzolsulfonsäuren,
2-Amino-5-acylaminobenzolsulfonsäuren,
4-Aminotoluol-3-sulfonsäuren,

gegebenenfalls mehrfach sulfierte Derivate des Dehydrothio-p-toluidins, die eine Sulfogruppe orthoständig zur Aminogruppe enthalten. Besonders zu nennen sind folgende Verbindungen :

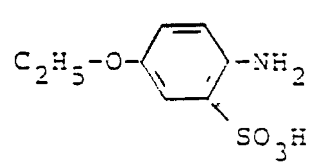

(Fortsetzung)

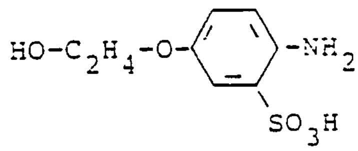

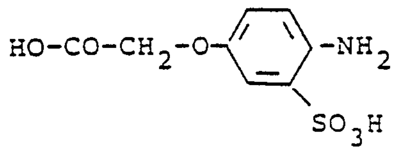

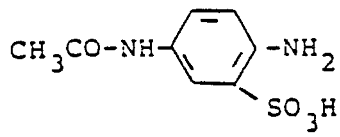

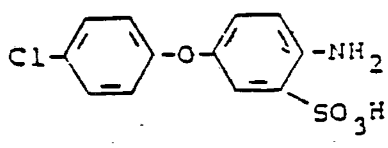

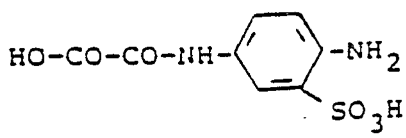

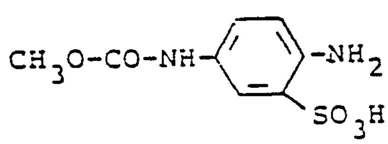

Die Diazokomponenten sind handelsüblich oder durch einfache technische Verfahrensschritte wie Veretherung, Hydrierung, Acylierung, Entacylierung, Sulfierung, Halogenierung aus handelsüblichen Verbindungen zu gewinnen.

Geeignete Kupplungskomponenten sind insbesondere 6-Hydroxypyridonderivate. Diese sind nach verschiedenen Methoden herstellbar, z. B. nach « Heterocyclic Compounds-Pyridine and its Derivatives — Part 3 » herausgegeben von Klinsberg, Verlag Interscience Publishers, 1962 und nach der britischen Patentschrift Nr. 1 256 095 sowie nach den deutschen Offenlegungsschriften 2 162 612, 2 349 709 und 2 902 486.

Besonders geeignete Pyridone sind

1,4-Dimethyl-6-hydroxypyridon-sulfonsäure-3 in Form ihres Natrium- oder Kaliumsalzes,
1,4-Dimethyl-6-hydroxypyridon-3-carbonsäureamid,
1,4-Dimethyl-6-hydroxypyridon-3-essigsäure,
1-Cyclohexyl-4-methyl-6-hydroxypyridon-sulfonsäure-3,
1,4-Dimethyl-6-hydroxypyridon-3-essigsäure,
1,4-Dimethyl-6-hydroxypyridon-3-methansulfonsäure,
1-Ethyl-3-cyan-6-hydroxy-2-pyridon-4-methansulfonsäure.

Besonders wertvolle Farbstoffe sind im folgenden beispielhaft angegeben :

| Nr. | Struktur | $\lambda_{max.}$ (nm) |
|---|---|---|
| 1 | 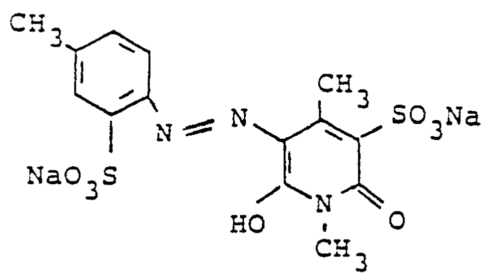 | 426 |
| 2 | 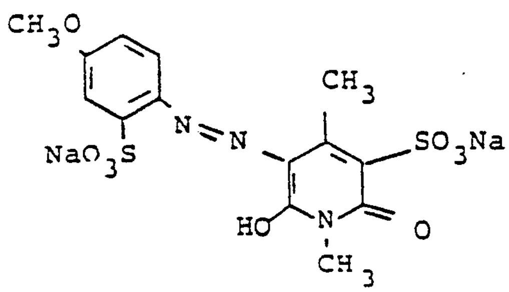 | 438 |
| 3 | 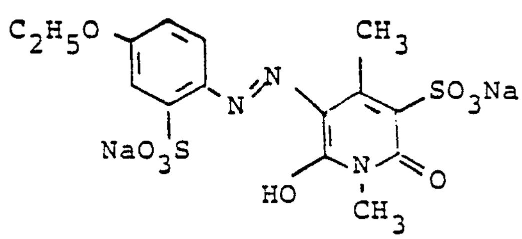 | 438 |
| 4 | 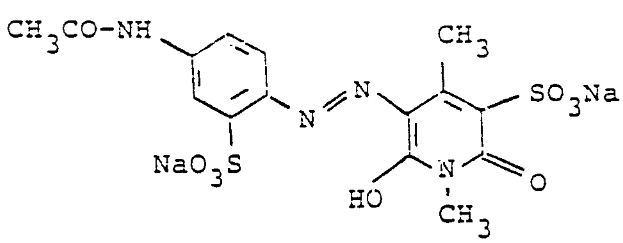 | 442 |
| 5 | 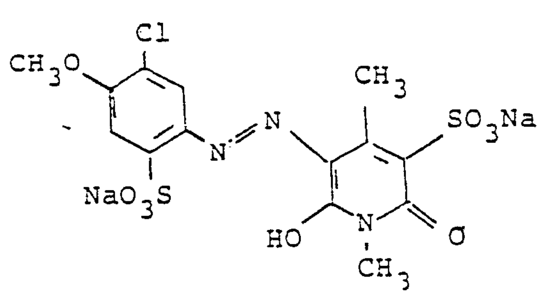 | 440 |

(Fortsetzung)

| Nr. | Struktur | λ max (nm) |
|---|---|---|
| 6 | 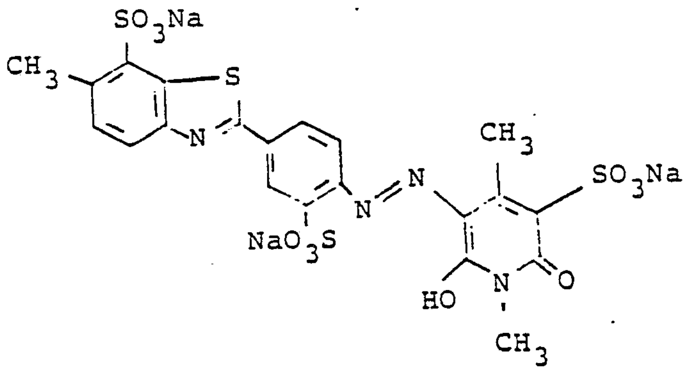 | 443 |
| 7 | 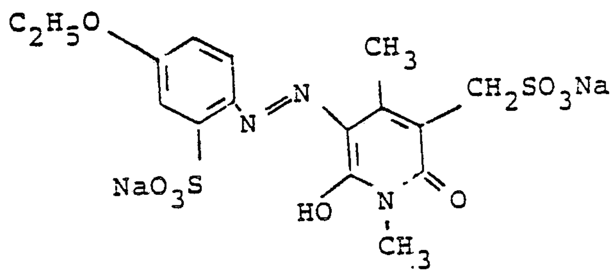 | 430 |
| 8 | 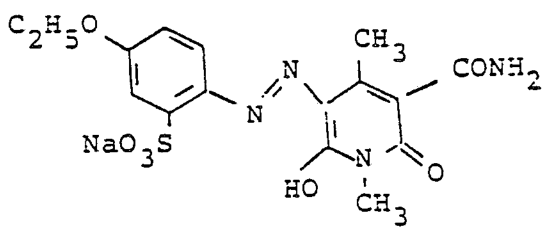 | 435 |
| 9 | 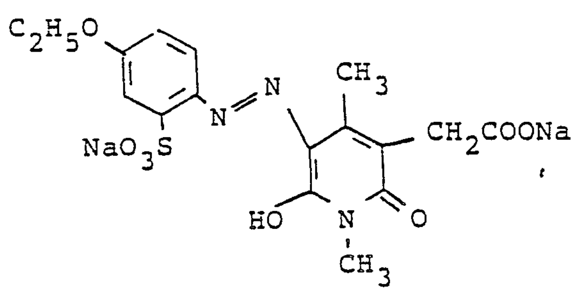 | 432 |
| 10 | 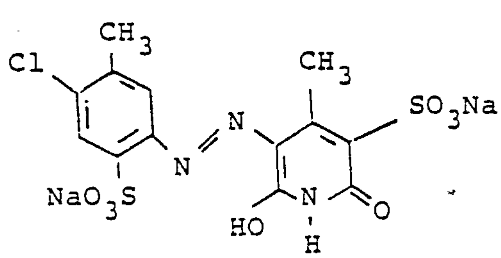 | 430 |

(Fortsetzung)

| Nr. | Struktur | λ max (nm) |
|---|---|---|
| 11 | 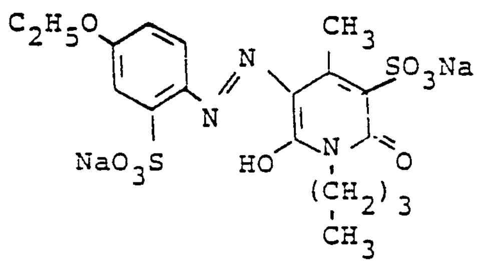 | 435 |
| 12 | 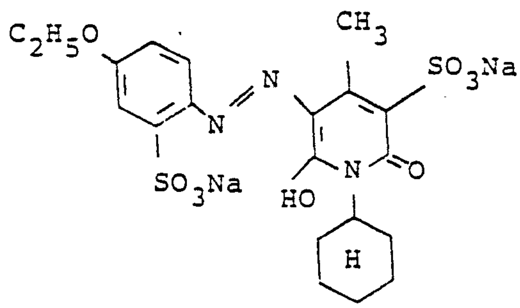 | 437 |
| 13 | 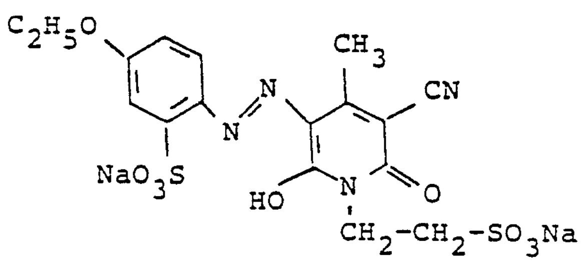 | 440 |
| 14 | 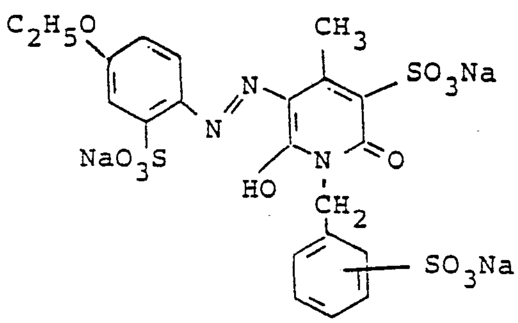 | 438 |
| 15 | 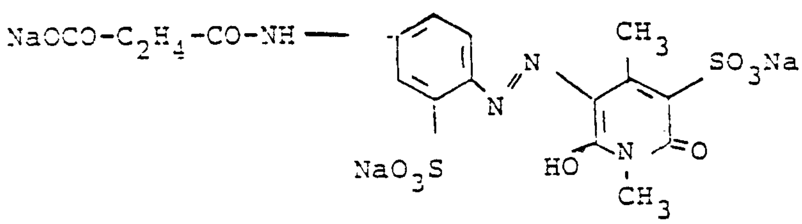 | 444 |

(Fortsetzung)

| Nr. | Struktur | λ max (nm) |
|---|---|---|
| 16 | 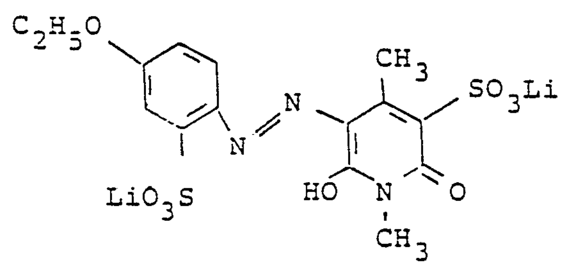 | 438 |
| 17 | 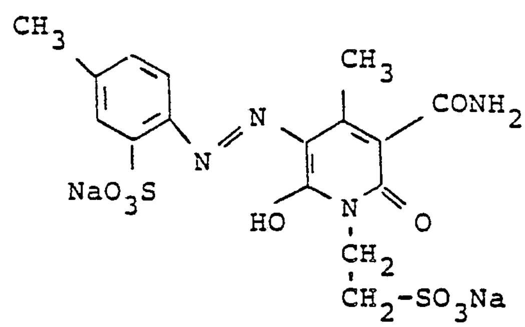 | 424 |
| 18 | 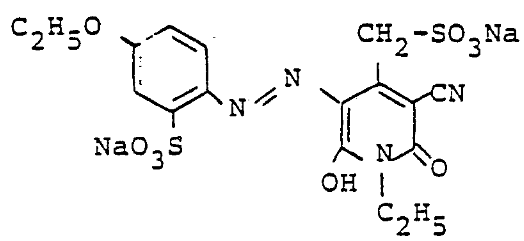 | 445 |
| 19 | 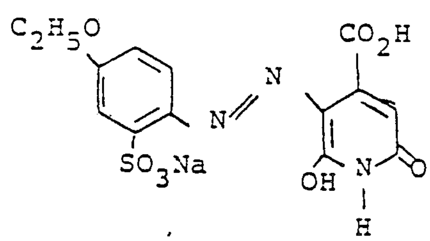 | 440 |
| 20 | 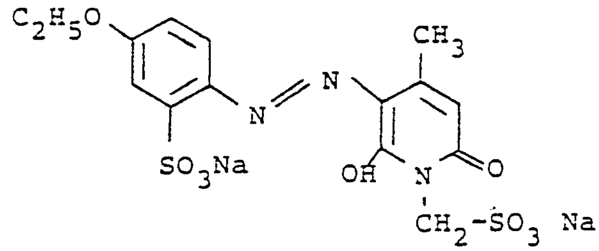 | 420 |

(Fortsetzung)

| Nr. | Struktur | $\lambda_{max}$ (nm) |
|---|---|---|
| 21: | 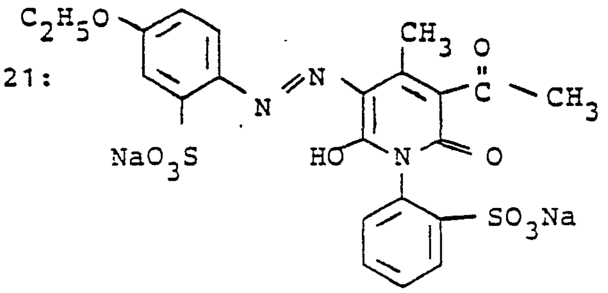 | 448 nm |
| 22: | 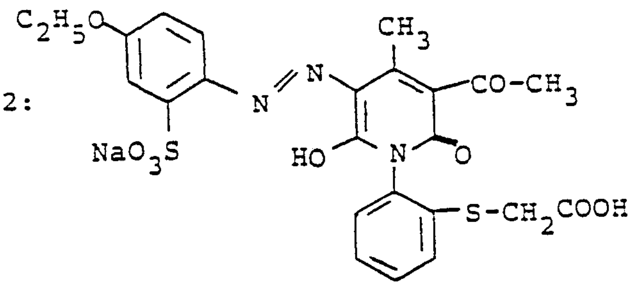 | 444 nm |
| 23: | 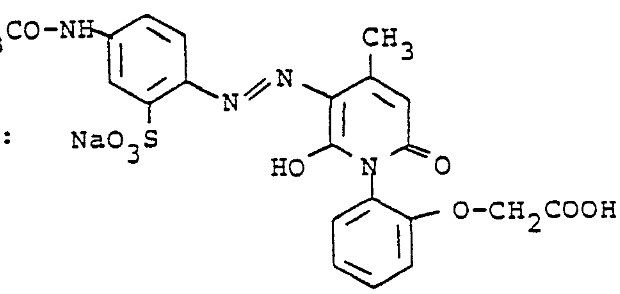 | 450 nm |

Die $\lambda_{max}$-Angaben beziehen sich auf Filterfolien, die nach Beispiel 1, bzw. durch Einbaden einer Farbstofflösung in eine entsprechende nicht angefärbte Gelatinefolie erhalten wurden.

Beispielhaft wird im folgenden die Herstellung des oben angegebenen Farbstoffs 3 angegeben.

Farbstoff Nr. 3

217 g 2-Amino-5-ethoxybenzolsulfonsäure werden in 2 000 ml Wasser mit
300 ml 37 %-iger Salzsäure versetzt und bei 0-5 °C mit einer Lösung von
70 g Natriumnitrit in
250 ml Wasser diazotiert. Man zerstört nach 30 Min. noch vorhandenes Nitrit mit Amidosulfonsäure und trägt in eine Lösung von
219 g 1,4-Dimethyl-6-hydroxypyridon-2-sulfonsäure-3 und
150 g Natriumcarbonat in 2 000 ml Wasser bei 0-10 °C ein. Der pH-Wert wird oberhalb 10 gehalten. Nach 3 Stunden wird abgesaugt, mit gesättigter Kochsalzlösung gewaschen. Das feuchte Rohprodukt wird aus 2 000 ml heißem Wasser umkristallisiert.

Man erhält 250 g sauberes, dünnschichtchromatographisch einheitliches Produkt in Form orangefarbener Kristalle ($\varepsilon$ : 36 000 in $H_2O$).

Weiterer Farbstoff kann aus den auf pH = 7 gestellten Mutterlaugen durch Aussalzen gewonnen werden.

In einer bevorzugten Ausführungsform werden die Farbstoffe gemäß Formel I in photographischen Aufzeichnungsmaterialien mit Beizen festgelegt. Als Beizen, insbesondere für die Festlegung in Gelbfilterschichten von farbphotographischen Materialien, eignen sich im allgemeinen Polymere mit

einem hohen Gehalt an kationischen Zentren aus tertiären und quartären Ammoniumgruppen. Besonders geeignete Beizen sind in Wasser lösliche oder dispergierbare kationische Polyurethane mit einem mittleren Molgewicht von 10 000 bis 60 000 und einem Quaternierungsgrad von mindestens 40 %, welche alternierend den Rest eines aminogruppenhaltigen Alkandiols und eines Urethanrestes enthalten, wie beispielsweise in der deutschen Patentschrift 2 315 304 beschrieben. Geeignet sind ferner die aus der deutschen Offenlegungsschrift 2 941 819 bekannten Beizen mit wiederkehrenden Einheiten der Struktur

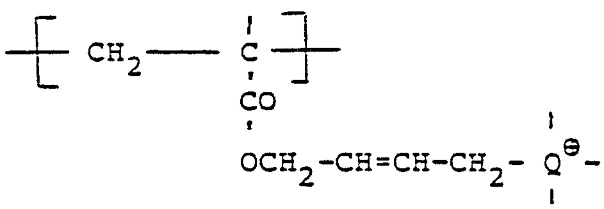

worin Q Stickstoff oder Phosphor bedeutet.

Weitere besonders geeignete Beizen sind basische Träger aus vernetzten Polymerteilchen mit einem Teilchendurchmesser von 1 µm und einem Gehalt an quaternären Ammonium- oder Phosphoniumgruppen von mindestens 2 mVal/g, die in der deutschen Offenlegungsschrift 3 109 931 beschrieben wurden.

Die Farbstoffe gemäß Formel I eignen sich deshalb besonders für photographische Anwendungen, da sie bei ihrer Freisetzung in alkalischen Verarbeitungsbädern keine Störung der Sensitometrie, keine Rückschichtenanfärbung und keine Ausflockung durch Salzbildung bewirken. Überraschenderweise zeichnen sie sich durch eine hohe Bindungsfestigkeit an kationische Beizmittel bei pH-Werten 6,5 und durch eine sehr gute Auswaschbarkeit bei pH-Werten 10 aus.

Die Farbstoffe können in die Schichten eines photographischen Aufzeichnungsmaterials in üblicher Weise eingearbeitet werden und sind für Filterschichten in allen photographischen Aufzeichnungsmaterialien geeignet.

Vorteilhaft sind insbesondere derartige Aufzeichnungsmaterialien, die nicht-diffundierende Farbkuppler enthalten. Hierbei ist in der Regel den rotempfindlichen Silberhalogenidemulsionsschichten mindestens je ein nicht-diffundierender Farbkuppler zur Erzeugung des blaugrünen Teilfarbenbildes zugeordnet, in der Regel ein Kuppler vom Phenol- oder α-Naphtholtyp. Den grünempfindlichen Silberhalogenidemulsionsschichten ist in der Regel mindestens je ein nicht-diffundierender Farbkuppler zur Erzeugung des purpurnen Teilfarbenbildes zugeordnet, wobei üblicherweise Farbkuppler vom Typ des 5-Pyrazolons, Pyrazolobenzimidazols, Pyrazolotriazols und des Indazolons Verwendung finden. Den blauempfindlichen Silberhalogenidemulsionsschichten ist in der Regel mindestens ein nichtdiffundierender Farbkuppler zur Erzeugnung des gelben Teilfarbenbildes zugeordnet, im allgemeinen ein Farbkuppler mit einer offenkettigen β-Diketomethylen- oder β-Diketomethin-Gruppierung.

Beispielhaft sei hier auf die Veröffentlichungen « Farbkuppler » von W. Pelz in « Mitteilungen aus den Forschungslaboratorien der Agfa, Leverkusen/München », Band III, Seite 111 (1961), K. Venkataraman in « The Chemistry of Synthetic Dyes », Vol. 4, 341 bis 387, Academic Press (1971), und T.H. James, « The Theory of the Photographic Process », 4. Ed., S. 353-362, verwiesen.

Bei den Farbkupplern kann es sich sowohl um übliche 4-Äquivalentkuppler handeln als auch um 2-Äquivalentkuppler. Zu den 2-Äquivalentkupplern sind auch die bekannten Weißkuppler zu rechnen, die jedoch bei Reaktion mit Farbentwickleroxidationsprodukten keinen Farbstoff ergeben, sowie DIR-Kuppler, bei denen es sich um Kuppler handelt, die in der Kupplungsstelle einen abspaltbaren Rest enthalten, der als diffundierender Entwicklungsinhibitor in Freiheit gesetzt werden kann.

Weitere geeignete Zusätze zu photographischen Aufzeichnungsmaterialien werden in der Zeitschrift « Product Licensing Index », Band 92, Dezember 1971, Seiten 107 bis 110 angegeben sowie in der Research Disclosure Nr. 22534 vom Januar 1983.

Die in den Materialien verwendeten Silberhalogenidemulsionen können als Halogenid Chlorid, Bromid und Jodid bzw. Mischungen davon enthalten. Vorzugsweise werden Bromid und Bromidjodid-Emulsionen verwendet, die in üblicher Weise gereift und optisch sensibilisiert werden können. Verwiesen sei diesbezüglich insbesondere auf Ullmanns Enzyklopädie der technischen Chemie, 4. Auflage, Band 18, Seiten 424 ff und 431 ff. Die Aufzeichnungsmaterialien können stabilisiert werden. Als Stabilisatoren sind besonders geeignet Azaindene, vorzugsweise Tetra- oder Pentaazaindene, insbesondere solche, die mit Hydroxyl- oder Aminogruppen substituiert sind. Derartige Verbindungen sind z. B. in dem Artikel von Birr, Z. Wiss. Phot. 47 (1952), 2-58, beschrieben. Weitere geeignet Stabilisatoren sind u. a. heterocyclische Mercaptoverbindungen, z. B. Phenylmercaptotetrazol, quaternäre Benzthiazolderivate und Benzotriazol.

## Beispiel 1

Schicht 1 (Vergleich)

Zu 100 ml einer 15 %-igen Gelatinelösung läßt man unter Rühren bei 40 °C nacheinander folgende Lösungen einlaufen :

1. 44 ml einer auf 25 Gew.- % eingestellten wäßrigen Lösung des kationischen Polyurethans 20 der Deutschen Offenlegungsschrift 2 315 304 und der US-PS-3 877 945.
2. 30 ml einer 2 %-igen Lösung von Saccharosemonolaurat,
3. 75 ml einer 4 %-igen Tartrazinlösung, auf 40 °C eingestellt,
4. 70 ml 2 %-ige Trisacryloylhexahydro-5-triazinlösung (Härtungsmittel).

Man füllt mit destilliertem Wasser auf 333 ml auf und vergießt auf einen Träger zu einer Trockenschichtdicke von 2,5 µm.

Schichten 2-10 (erfindungsgemäß)

Diese werden analog hergestellt, jedoch mit dem Unterschied, daß anstelle einer 4 %-igen Lösung des Tartrazins jeweils 150 ml einer Lösung der Farbstoffe 1, 2, 3, 4, 6, 9, 11, 13 und 19 (erfindungsgemäß) mit dem gleichen molaren Gehalt an Farbstoff eingesetzt werden.

Die erhaltenen Schichten ergeben nach Trocknung bei der Messung hinter Blaufilter (Macbeth TD 504) folgende Dichten :

| Schicht | Farbstoff | Filterdichte |
|---|---|---|
| 1 | Tartrazin | 0,72 |
| 2 | 2 | 1,38 |
| 3 | 3 | 1,40 |
| 4 | 4 | 1,26 |
| 5 | 6 | 1,30 |
| 6 | 9 | 1,01 |
| 7 | 11 | 1,35 |
| 8 | 13 | 1,40 |
| 9 | 1 | 0,90 |
| 10 | 19 | 1,20 |

Je 1 Streifen der erhaltenen Filterschichten wird 20 Min. mit destilliertem Wasser in stehendem Wasser gewässert. Hierbei zeigt sich, daß die Farbstoffe nicht oder nur unwesentlich ausgewässert werden.

Je 1 Streifen der erhaltenen Filterschichten wird des weiteren bei 25 °C 6 Min. lang in ein Reagenzglas mit Erstenwickler eingetaucht. Der Erstentwickler ist, wie im Manual for Processing Kodak Ektachrome Film using Process E7, Eastman Kodak Company 1977 beschrieben, zusammengesetzt. Alle Schichten werden vollständig entfärbt.

Beispiel 1 zeigt, daß die Farbstoffe gemäß Formel I in farbphotographischen Materialien diffusionsfest festgelegt aber bei der Verarbeitung entfernt werden können.

Weiterhin ergibt sich die Vorteilhaftigkeit der Farbstoffe gemäß Formel I gegenüber dem aus der US-PS-3 672 898 bekannten Tartrazin. Die Farbstoffe weisen eine deutlich höhere Farbstärke auf und ermöglichen deshalb eine Verringerung der Trockenschichtdicke von Gelbfilterschichten in photographischen Aufzeichnungsmaterialien. Hieraus ergibt sich bei der Belichtung ein Gewinn an Schärfe und bei der Verarbeitung ein verkürzter Diffusionsweg für Chemikalien und Reaktionsprodukte.

## Beispiel 2

Aufzeichnungsmaterial A (Vergleich)

Ein photographisches Aufzeichnungsmaterial mit einer Gelbfilterschicht wird hergestellt, welches im wesentlichen dem Material entspricht, welches in der Deutschen Offenlegungsschrift 3 148 108 in Beispiel A, Aufzeichnungsmaterial A beschrieben wurde, mit der Ausnahme, daß in der Gelbfilterschicht nicht eine gelbe Silberdispersion sondern der gelbe Farbstoff Tartrazin verwendet wurde. Hierzu wurden also auf einen Schichtträger aus Cellulosetriacetat nacheinander die im folgenden angegebenen Schichten aufgetragen :

1. Eine rotsensibilisierte Silberhalogenidemulsion mit einem Blaugrünkuppler.
2. Eine 2 %-ige wäßrige Gelatinelösung mit einem polymeren Weißkuppler.
3. Eine grünsensibilisierte Silberhalogenidemulsion mit einem Purpurkuppler.
4. Eine Gelbfilterschicht, die wie folgt erhalten wurde :

Zu 100 ml einer 15 %-igen Gelatinelösung werden unter Rühren bei 40 °C nacheinander folgende Lösungen gegeben :

a) 44 ml einer auf 25 Gew.-% eingestellten wäßrigen Lösung des kationischen Polyurethans Nr. 20 der Deutschen Offenlegungsschrift 2 315 304 und Nr. 20 der US-PS 3 877 945.

b) 30 ml einer 2 %-igen Lösung von Saccharosemonolaurat.

c) 150 ml einer 0,043 molaren Tartrazinlösung.

Nachdem mit destilliertem Wasser auf 333 ml aufgefüllt wurde, wird die Lösung zu einer Trockenschichtdicke von 2,5 μm vergossen. Die Filterdichte, gemessen hinter Blaufilter, beträgt 0,7.

5. Eine unsensibilisierte, blauempfindliche Silberhalogenidemulsion mit einem Gelbkuppler.

6. Eine Gelatineschutzschicht, die anschließend gehärtet wurde.

Aufzeichnungsmaterial B (erfindungsgemäß)

Das erfindungsgemäße Material B entspricht in allen Einzelheiten dem Vergleichsmaterial A, mit der Ausnahme, daß anstelle des Tartrazins der Farbstoff Nr. 3 verwendet wird. Die Lösung wird zu einer Trockenschichtdicke von 1,6 μm gegossen. Die Filterdichte, gemessen hinter Blaufilter, beträgt 0,8.

Aufzeichnungsmaterial C (erfindungsgemäß)

Das Material C entspricht dem Material B mit der Ausnahme, daß anstelle des Farbstoffs Nr. 3 in der Gelbfilterschicht der Farbstoff Nr. 19 verwendet wird.

Von jedem der Aufzeichnungsmaterialien A bis C wurde je eine Probe nach dreitägiger Lagerung bei 20 °C und 45 bis 60 % rel. Luftfeuchtigkeit (Lagerung I) hinter einem Verlaufskeil belichtet und dem im « Manual for Processing Ektachrome Film using Process E7 » (Eastman-Kodak, 1977) beschriebenen Umkehrverarbeitungsprozeß unterworfen.

Je eine weitere Probe wurde einer dreitägigen Lagerung bei 35 °C und 90 % rel. Luftfeuchtigkeit (Lagerung II) in gleicher Weise belichtet und verarbeitet. Es werden die in der folgenden Tabelle angegebenen sensitometrischen Werte erhalten :

| | | Lagerung | | | | | |
|---|---|---|---|---|---|---|---|
| | | I | | | II | | |
| | | gb | pp | bg | gb | pp | bg |
| Material A | | | | | | | |
| | E | 22.0 | 22.0 | 21.4 | 20.1 | 22.0 | 21.6 |
| | $D_{max}$ | 3.27 | 3.28 | 2.94 | 3.30 | 3.0 | 3.01 |
| | M | | 0,77 | 0,63 | | | |
| Material B (erfindungsgemäß) | | | | | | | |
| | E | 21.8 | 21.7 | 21.4 | 20.5 | 22.1 | 21.6 |
| | $D_{max}$ | 3.28 | 3.28 | 2.98 | 3.29 | 3.08 | 2.90 |
| | M | | 0,82 | 0,68 | | | |
| Material C (erfindungsgemäß) | | | | | | | |
| | E | 21.8 | 21.6 | 21.3 | 20.3 | 22.0 | 21.5 |
| | $D_{max}$ | 3.22 | 3.22 | 2.93 | 3.30 | 3.02 | 2.80 |
| | M | | 0,81 | 0,67 | | | |

E : Empfindlichkeit, eine Steigerung um 0,301 0 entspricht einer Verdoppelung der Empfindlichkeit.

$D_{max}$ : Maximaldichte

M : Modulationsübertragungsfaktor bei einer Ortsfrequenz von 10 Linien/mm, gemessen mit Rechteckrastern gemäß G. Langner und R. Müller in « Mitteilungen aus den Forschungslaboratorien der Agfa-Gevaert AG », Leverkusen-München, Bd. 4, Seite 339 ff. Der Modulationsübertragungsfaktor ist ein Maß für die Schärfe photographischer Materialien, verwiesen wird in diesem Zusammenhang auf Ullmanns Enzyklopädie der technischen Chemie, 4. Auflage, Bd. 18, 1979, Seite 416 ff.

Aus der Tabelle geht hervor, daß das erfindungsgemäße Material verglichen mit Tartrazin enthaltendem Material bei gleicher Absorption eine erheblich geringere Schichtdicke aufweist. Hieraus ergibt sich eine bessere Schärfe, wie aus dem größeren Modulationsübertragungsfaktor M hervorgeht. Die erhaltenen Werte für die Empfindlichkeit und die Maximaldichte zeigen, daß dieses nicht mit einer Verschlechterung anderer sensitometrischer Werte erkauft werden muß.

**Patentansprüche**

1. Photographisches Aufzeichnungsmaterial mit wenigstens einer lichtempfindlichen Silberhalogenidemulsionsschicht und gegebenenfalls weiteren Schichten, dadurch gekennzeichnet, daß wenigstens eine Schicht einen Farbstoff der folgenden Formel I enthält

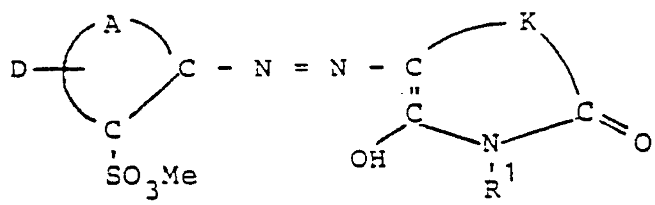

(I)

worin bedeuten

A Rest zur Vervollständigung einer Diazokomponente aus der Benzolreihe,

K Rest zur Vervollständigung einer Kupplungskomponente aus der Klasse der Hydroxypyridone,

D Gruppe mit Elektronendonoreigenschaften in p-Stellung zur Azogruppe,

$R^1$ H oder ggf. substituiertes Alkyl, Cycloalkyl, Aryl oder Aralkyl,

Me Wasserstoff oder ein Kation,

mit der Maßgabe, daß wenigstens eine weitere löslichmachende Gruppe enthalten ist.

2. Aufzeichnungsmaterial nach Anspruch 1, dadurch gekennzeichnet, daß der Farbstoff in einer Gelbfilterschicht zwischen einer blauempfindlichen und den rot und grünempfindlichen Schichten enthalten ist.

3. Aufzeichnungsmaterial nach Anspruch 1, dadurch gekennzeichnet, daß die mit K vervollständigte Kupplungskomponente folgender Formel II entspricht

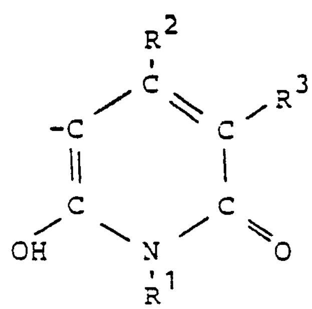

(II)

worin

$R^1$ die in Anspruch 1 angegebene Bedeutung hat und worin bedeuten

$R^2$ ggf. substituiertes Alkyl oder eine gegebenenfalls veresterte Carboxylgruppe,

$R^3$ Wasserstoff oder eine funktionelle Gruppe.

4. Aufzeichnungsmaterial nach Anspruch 1, dadurch gekennzeichnet, daß die mit A vervollständigte Diazokomponente folgender Formel III entspricht

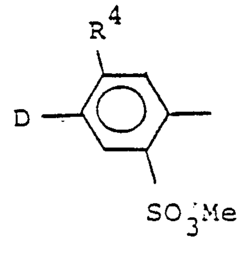

(III)

worin

D und Me die in Anspruch 1 angegebene Bedeutung haben und worin

$R^4$ Wasserstoff, Alkyl, Alkoxy oder Halogen bedeutet.

5. Aufzeichnungsmaterial nach Anspruch 1, dadurch gekennzeichnet, daß der Farbstoff folgender Formel IV entspricht

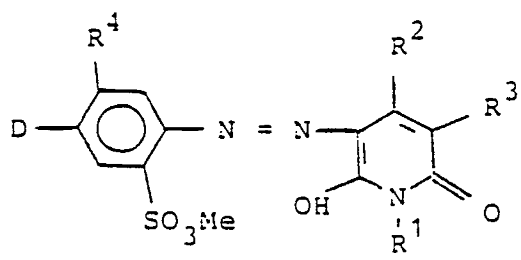

(IV)

worin bedeuten

D Alkyl, Alkoxy, Phenoxy, Acylamino- oder Alkoxycarbonylaminogruppe oder ein über die 2-Position verknüpfter Benzothiazolylrest oder Halogen,

$R^1$ H oder ggf. substituiertes Alkyl, Cycloalkyl, Aryl oder Aralkyl,

$R^2$ ggf. substituiertes Alkyl oder eine veresterte Carboxylgruppe,

$R^3$ H oder $-SO_3Me$, $-CH_2CO_2Me$, $-CH_2SO_3Me$, $-SO_2CH_3$, $-CONH_2$, $-CN$, Acyl bzw. verestertes Carboxyl,

$R^4$ Wasserstoff, Alkyl, Alkoxy oder Halogen.

6. Aufzeichnungsmaterial nach Anspruch 1, dadurch gekennzeichnet, daß der Farbstoff mit einer Beize festgelegt ist.

7. Material nach Anspruch 6, dadurch gekennzeichnet, daß die Beize kationische Zentren mit Ammonium- und/oder Phosphoniumgruppen enthält.

**Claims**

1. Photographic recording material having at least one photosensitive silver halide emulsion layer and, optionally, other layers, characterised in that at least one layer contains a dye of the following formula I

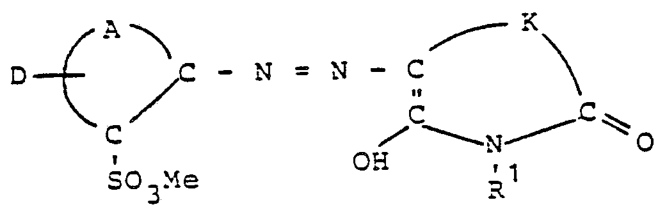

(I)

wherein

A denotes the radical to complete a diazo component from the benzene series,

K denotes the radical to complete a coupling component from the class of hydroxy pyridones,

D denotes a group having electron donor properties in the p-position to the azo group,

$R^1$ denotes H or optionally substituted alkyl, cycloalkyl, aryl or aralkyl, and

Me denotes hydrogen or a cation,

with the proviso that at least one other solubilising group is present.

2. Recording material according to Claim 1, characterised in that the dye is contained in a yellow filter layer between a blue-sensitive layer and the red- and green-sensitive layers.

3. Recording material according to Claim 1, characterised in that the coupling component completed with K corresponds to the following formula II

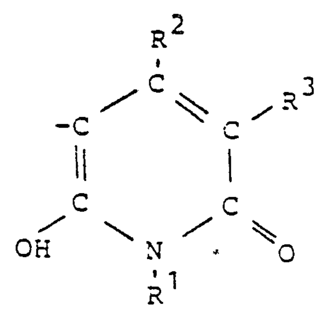

(II)

wherein

$R^1$ has the meaning given in Claim 1 and wherein

$R^2$ denotes optionally substituted alkyl or an optionally esterified carboxyl group, and

$R^3$ denotes hydrogen or a functional group.

4. Recording material according to Claim 1, characterised in that the diazo component completed with A corresponds to the following formula III

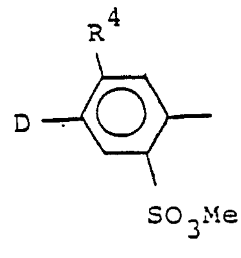

(III)

wherein

D and Me have the meaning given in Claim 1 and wherein

$R^4$ denotes hydrogen, alkyl, alkoxy or halogen.

5. Recording material according to Claim 1, characterised in that the dye corresponds to the following formula IV

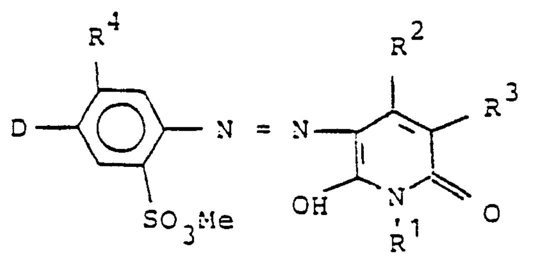

(IV)

wherein

D denotes alkyl, alkoxy, phenoxy, acylamino or alkoxycarbonylamino group or a benzothiazolyl radical attached via the 2-position or halogen,

$R^1$ denotes H or optionally substituted alkyl, cycloalkyl, aryl or aralkyl,

$R^2$ denotes optionally substituted alkyl or an esterified carboxyl group,

$R^3$ denotes H or $-SO_3Me$, $-CH_2CO_2Me$, $-CH_2SO_3Me$, $-SO_2CH_3$, $-CONH_2$, $-CN$, acyl or esterified carboxyl,

$R^4$ denotes hydrogen, alkyl, alkoxy or halogen.

6. Recording material according to Claim 1, characterised in that the dye is fixed with a mordant.

7. Material according to Claim 6, characterised in that the mordant contains cationic centres containing ammonium and/or phosphonium groups.

**Revendications**

1. Matériau d'enregistrement photographique contenant au moins une couche photosensible d'émulsion d'halogénure d'argent et le cas échéant d'autres couches, caractérisé en ce qu'une couche au moins contient un colorant de formule I :

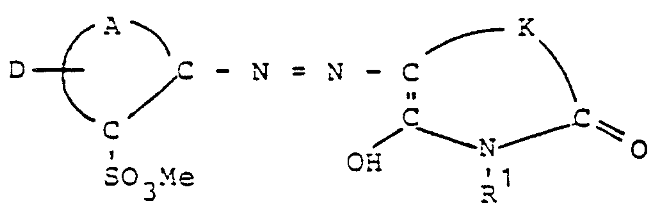

(I)

dans laquelle

A représente un reste complétant un composant diazotable de la série benzénique,

K représente un reste complétant un copulant de la classe des hydroxypyridones,

D représente un groupe possédant des propriétés de donateur d'électrons en position para du groupe azo,

$R^1$ représente l'hydrogène ou un groupe alkyle, cycloalkyle, aryle ou aralkyle éventuellement substitué,

Me représente l'hydrogène ou un cation
étant spécifié que la molécule contient au moins un autre groupe solubilisant.

2. Matériau d'enregistrement selon la revendication 1, caractérisé en ce que le colorant est contenu dans une couche filtrante jaune entre une couche sensible au bleu et les couches sensibles au rouge et au vert.

3. Matériau d'enregistrement selon la revendication 1, caractérisé en ce que le copulant complété par K répond à la formule II :

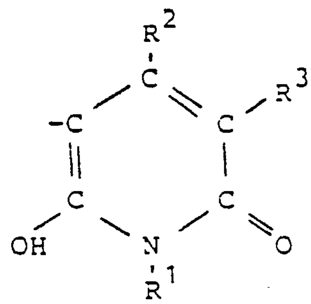

(II)

dans laquelle

$R^1$ a les significations indiquées dans la revendication 1,

$R^2$ représente un groupe alkyle éventuellement substitué ou un groupe carboxyle éventuellement estérifié,

$R^3$ représente l'hydrogène ou un groupe fonctionnel.

4. Matériau d'enregistrement selon la revendication 1, caractérisé en ce que le composant diazotable complété par A répond à la formule III :

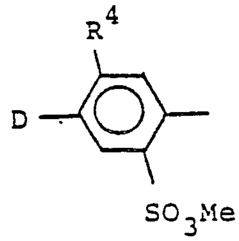

(III)

dans laquelle

D et Me ont les significations indiquées dans la revendication 1 et

$R^4$ représente l'hydrogène, un groupe alkyle, alcoxy ou un halogène.

5. Matériau d'enregistrement selon la revendication 1, caractérisé en ce que le colorant répond à la formule IV :

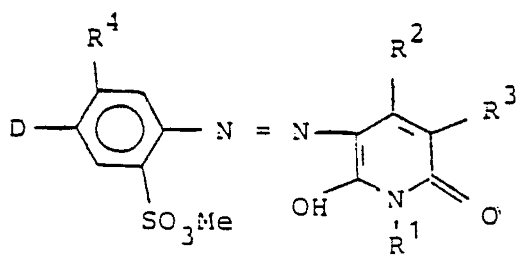

(IV)

dans laquelle

D représente un groupe alkyle, alcoxy, phénoxy, acylamino ou alcoxycarbonylamino ou un reste benzothiazolyle relié par l'intermédiaire de la position 2 ou un halogène,

$R^1$ représente l'hydrogène ou un groupe alkyle, cycloalkyle, aryle ou aralkyle éventuellement substitué,

$R^2$ représente un groupe alkyle éventuellement substitué ou un groupe carboxyle estérifié,

$R^3$ représente H ou $-SO_3Me$, $-CH_2CO_2Me$, $-CH_2SO_3Me$, $-SO_2CH_3$, $-CONH_2$, $-CN$, acyle ou carboxyle estérifié,

$R^4$ représente l'hydrogène, un groupe alkyle, alcoxy ou un halogène.

6. Matériau d'enregistrement selon la revendication 1, caractérisé en ce que le colorant est fixé à l'aide d'un mordant.

7. Matériau selon la revendication 6, caractérisé en ce que le mordant contient des centres cationiques à groupes ammonium et/ou phosphonium.